# DEMANDE DE BREVET EUROPEEN

(11) **EP 0 547 963 A1**
(43) Date de publication de la demande: **23.06.1993**
(21) Numéro de dépôt: 92403420.0
(22) Date de dépôt: 15.12.1992
(51) Int. Cl.: A01G 13/02

(54) **Machine pour l'arrachage des arceaux servant à la formation de tunnels de culture**

(30) Priorité: 17.12.1991 FR 9115838
(71) Demandeur: RABAUD S.A., 85110 Sainte-Cécile (FR)
(72) Inventeur: Rabaud, Claude, F-85110 Sainte-Cecile (FR)
(74) Mandataire: Michelet, Alain

(57) **Abrégé**

La machine arracheuse d'arceaux comporte, rassemblés sur un même châssis (1) qui est porté au-dessus des arceaux, un dispositif d'arrachage (9) muni d'une tête (10) qui comporte une table (21) formant une voûte adaptée à la nature et au gabarit des arceaux (8).

La tête d'arrachage (10) est animée d'un mouvement de va-et-vient, de bas en haut et inversement, au moyen d'un parallélogramme déformable.

Elle comporte un organe, en forme de doigt (25) sensible à la présence d'un arceau (8) pour déclencher la séquence d'arrachage.

Les arceaux arrachés sont stockés dans un ratelier (35) disposé à l'avant du châssis.

## Description

La présente invention concerne une machine d'arrachage des arceaux qui servent à la formation de tunnels de culture.

Pour effectuer la récolte, ou pour libérer le terrain, il est nécessaire d'enlever les structures en forme d'arceaux qui sont prévues pour soutenir et conformer le film plastique protecteur. Ces arceaux sont généralement réalisés à partir d'un fil métallique ; ils peuvent également être constitués d'une tige en matériau plastique.

La mise en terre des arceaux peut être réalisée manuellement ou au moyen de machines automatiques. Les extrémités de l'arceau pénètrent dans le sol sur une distance qui est de l'ordre de 30 cm. L'arrachage de ces arceaux, manuellement, nécessite des efforts relativement importants. En effet, les extrémités des arceaux sont parfois oxydées et, avec le tassement de la terre, et la longueur enterrée, l'effort de traction nécessaire pour l'arrachage devient relativement important. Ces arceaux sont plantés avec un intervalle de 1 ou 2m selon le cas. La quantité d'arceaux à manipuler est impressionnante et, très vite, leur poids et leur encombrement rendent très difficiles les conditions de travail des opérateurs.

De plus, l'arrachage d'un arceau nécessite soit une traction sur chacune de ses extrémités, soit la présence de deux opérateurs.

La présente invention propose une machine qui permet d'arracher tous types d'arceaux, automatiquement, et qui permet de les stocker de façon temporaire, au moins sur la longueur d'une bande de terre cultivée.

On connaît des machines d'arrachage, comme par exemple celle décrite dans le document FR-A-2 484 193. Cette machine arrache les arceaux au moyen d'une rampe disposée dans le sens longitudinal d'avancement de la machine et constituée de bandes sans fin guidées au moyen de galets. L'arceau est emprisonné entre un couple de bandes sans fin et il est sorti de terre, au fur et à mesure de l'avance de la machine. Les arceaux arrachés sont stockés dans un ratelier avant d'être évacués.

Les arceaux sont arrachés par une traction qui s'exerce en deux points distincts disposés de part et d'autre du plan médian. Cette technique, lorsque les arceaux sont difficiles à arracher, peut provoquer une déformation conséquente et nécessiter des opérations complémentaires de redressage de ces arceaux.

La machine selon l'invention présente l'avantage d'arracher les arceaux sans les déformer, c'est-à-dire sans rendre nécessaire une opération complémentaire de recalibrage avant leur réutilisation.

La machine selon l'invention comporte, rassemblés sur un même châssis qui est porté au-dessus des arceaux, un dispositif d'arrachage et un ratelier servant au stockage des arceaux arrachés ; le dispositif d'arrachage étant constitué - d'une tête munie d'une table dont la forme s'apparente à une voûte adaptée au gabarit de l'arceau à arracher, et - de moyens de déplacement de ladite tête, de bas en haut et inversement, pour agripper chaque arceau et les libérer au-dessus dudit ratelier de stockage, lesquels moyens de déplacement de la tête sont mis en oeuvre automatiquement par un système de commande qui comprend notamment un organe de détection de la présence d'un arceau au niveau de ladite tête.

Selon une disposition préférentielle de l'invention, les moyens de déplacement de la tête d'arrachage sont constitués de bras formant deux côtés d'un parallélogramme qui est déformable sous l'effet d'un organe de commande du type vérin. Ces bras sont articulés à l'avant du châssis autour d'axes superposés disposés transversalement par rapport au sens d'avancement de la machine, lesquels bras, en position basse, se situent en-dessous de leurs axes d'articulation avant de façon à permettre, lors de l'arrachage, d'annuler la vitesse relative de la tête d'arrachage par rapport au sol afin d'effectuer un arrachage dudit arceau dans un plan sensiblement vertical.

Toujours selon l'invention, la machine comporte des bras rabatteurs dont le mouvement est conjugué à celui des bras d'actionnement de la tête d'arrachage, lesquels bras rabatteurs accompagnent et/ou propulsent les arceaux vers le ratelier et les maintiennent élastiquement dans ledit ratelier.

Selon une autre disposition de l'invention, le ratelier de stockage des arceaux arrachés comprend deux caissons latéraux solidaires d'un même axe transversal qui est soumis à des moyens de manoeuvre pour réaliser le basculement desdits caissons afin de déposer les arceaux sur le sol et, simultanément à ce basculement, pour permettre le relevage des bras de commande de la tête d'arrachage et l'escamotage des bras rabatteurs.

Selon une autre disposition de l'invention, la machine comporte des déflecteurs arrière disposés de part et d'autre de la tête d'arrachage, inclinés de façon à faire progresser l'arceau arraché vers le ratelier, ces déflecteurs arrière étant surmontés d'écrans latéraux disposés au-dessus dudit ratelier, de façon à canaliser chaque arceau arraché.

Toujours selon l'invention, la tête d'arrachage comporte au moins un doigt de déclenchement de la séquence d'arrachage, disposé sur la tête d'arrachage, actionné automatiquement par l'arceau lorsqu'il est en butée sur ladite tête.

Selon une autre disposition de l'invention, la tête d'arrachage comporte des moyens de blocage de l'arceau, constitués de pinces disposées latéralement pour plaquer l'arceau sur la table, lesquelles pinces sont actionnées simultanément au début de la séquence d'arrachage, au moyen d'un organe du type vérin

Toujours selon l'invention, la machine comporte en plus du contacteur de la tête d'arrachage, qui initialise la séquence, un système de contacteurs actionnés par l'intermédiaire d'une came solidaire des bras de la tête d'arrachage ; l'un des contacteurs servant à couper l'alimentation des organes de manoeuvre c'est-à-dire le vérin des pinces et le vérin de levage des bras de la tête, l'autre contacteur servant à inverser l'alimentation des organes de manoeuvre.

Toujours selon l'invention, le circuit hydraulique de commande comprend un électrodistributeur manoeuvré par les contacteurs, des clapets de retenue et étrangleurs sont disposés au niveau des vérins de manoeuvre de façon à retarder la fermeture des pinces par rapport à la levée de la tête d'arrachage et à retarder la descente de la tête d'arrachage par rapport à l'ouverture des pinces, cette ouverture des pinces étant initialisée au moyen d'un ressort de rappel.

L'invention sera encore détaillée à l'aide de la description suivante d'un mode de réalisation et des dessins annexés donnés à titre indicatif et dans lesquels :
- la figure 1 est une vue en élévation schématique de la machine selon l'invention, en coupe selon 1-1 ;
- la figure 2 est une vue de dessus de cette machine, avec une coupe partielle au niveau de la tête d'arrachage, selon 2-2 ;
- la figure 3 est une vue de face, côté tracteur, de la machine ;
- la figure 4 est une vue arrière de la machine ;
- la figure 5 illustre, de façon schématique, le mouvement de la tête d'arrachage et des bras de rabattage ;
- la figure 6 illustre le mouvement du ratelier pour décharger les arceaux arrachés ;
- les figures 7 et 8 illustrent le circuit de commande des organes de manoeuvre de la machine.

Telle que représentée sur les figures, la machine comporte un châssis 1 dont la forme générale s'apparente à un U disposé dans un plan horizontal, dont les deux branches latérales 2 sont dirigées vers l'arrière. La poutre transversale 3 disposée à l'avant, comporte des moyens d'attelage 4 classiques, du type trois points, pour être reliés au système de relevage 5 d'un tracteur non représenté.

Les branches latérales 2 comportent à leurs extrémités arrière, des roues de jauges 6, disposées symétriquement par rapport au plan vertical médian 7 de la machine.

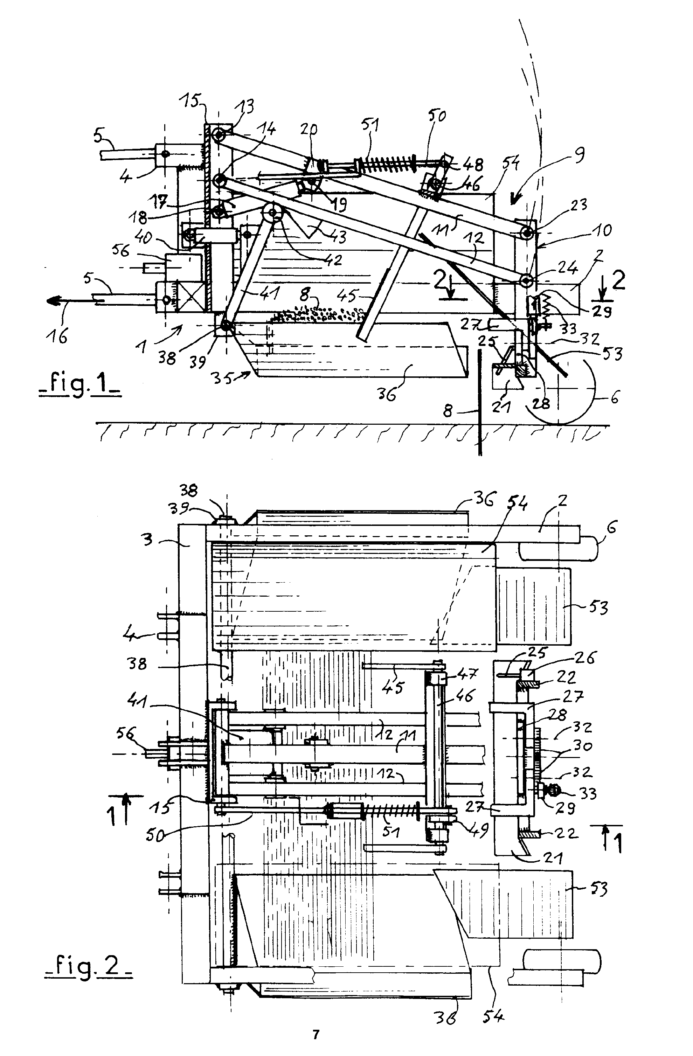

On a représenté, figures 1, 3 et 4, un arceau 8 planté en terre, prêt à être déterré par le dispositif d'arrachage 9. Ce dispositif d'arrachage 9 comporte une tête d'arrachage 10 soutenue par des bras 11 et 12 qui forment deux côtés d'un parallélogramme déformable. Le bras supérieur 11 est unique ; les bras inférieurs sont au nombre de deux, disposés de part et d'autre du plan vertical médian 7 de la machine. Les bras 11 et 12 sont articulés autour d'axes 13 et 14 respectivement, disposés à l'avant de la machine. Ces axes 13 et 14 sont pris dans une chape 15 qui forme un côté du parallélogramme déformable ; cette chape 15 est solidaire du châssis, disposée verticalement et adossée à la structure d'attelage 4 de la machine. Les axes 13 et 14 se situent à la partie supérieure de la chape 15 ; ils sont parallèles entre eux et disposés transversalement par rapport au sens d'avancement de la machine représenté par la flèche 16.

On remarque, toujours figure 1, un vérin de manoeuvre 17 interposé entre un axe 18 situé à mi-hauteur de la chape 15 et un axe 19 pris dans une chape 20 aménagée sur le bras supérieur 11 du dispositif d'arrachage. Ce vérin 17 procure au dispositif d'arrachage 9 un mouvement vertical de bas en haut et inversement.

La tête d'arrachage 10 comporte une table 21 constituée d'une bande de tôle formant une voûte qui est de préférence adaptée au gabarit des arceaux 8 à déterrer. Cette table 21 est supportée par une structure 22 en forme de cadre, qui est solidaire des bras 11 et 12. Cette structure 22, disposée verticalement derrière la table 21 est articulée au moyen des axes 23 et 24 sur les extrémités des bras 11 et 12 respectivement ; elle forme l'un des côtés du parallélogramme déformable comprenant lesdits bras 11, 12 et la chape 15.

On note aussi qu'en position basse, les bras 11 et 12 sont inclinés vers l'arrière ; les axes 23 et 24 se situent en-dessous du niveau des axes 13 et 14. Cette disposition permet, lors de l'arrachage, d'annuler la vitesse relative de la tête d'arrachage 10 par rapport au sol ; on effectue ainsi un arrachage de l'arceau 8 dans un plan sensiblement vertical.

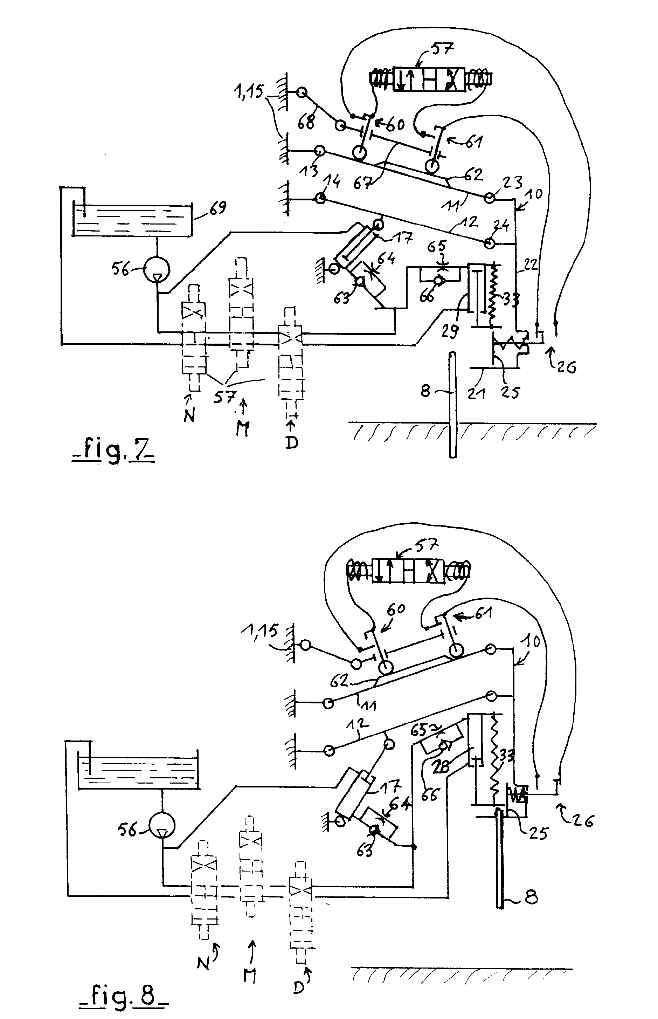

Pour déclencher la séquence d'arrachage des arceaux, on dispose d'un doigt de déclenchement 25 disposé à l'extrémité de la table 21, ce doigt est actionné automatiquement par l'arceau lorsqu'il est engagé à fond dans la tête d'arrachage, en butée. Le doigt 25 actionne un contacteur 26 qui fait partie de l'ensemble des moyens du système de commande détaillé plus loin en liaison avec les figures 7 et 8.

Pour maintenir l'arceau 8 sur la table 21, pendant le relevage de la tête 10, on dispose d'un système de pinces constitué de leviers 27 disposés latéralement, de part et d'autre du plan longitudinal médian 7 de la machine. Ces leviers 27 sont articulés sur une plaque 28 solidaire de la structure 22 de la tête. Ils sont actionnés au moyen d'un vérin 29 et sont couplés l'un à l'autre par des secteurs dentés 30 ou tout autre moyen approprié. Les leviers 27 se présentent en fait sous la forme d'équerre ; ils sont articulés autour d'axes longitudinaux 32. Un ressort de rappel 33 est disposé parallèlement au vérin 29 pour permettre un relâchement rapide des pinces 27.

Après l'arrachage, les arceaux 8 sont stockés dans un ratelier 35 qui s'étend longitudinalement, entre l'avant de la machine et la tête d'arrachage 10. Ce ratelier 35 comporte deux caissons 36 disposés latéralement, de part et d'autre du plan médian de la machine et de la tête d'arrachage. Ces caissons sont constitués de tôles pliées pourformer une sorte de Vé ouvert à 90°, servant d'accueil aux extrémités des arceaux 8. La partie avant des caissons comporte une paroi 37 qui s'étend en hauteur

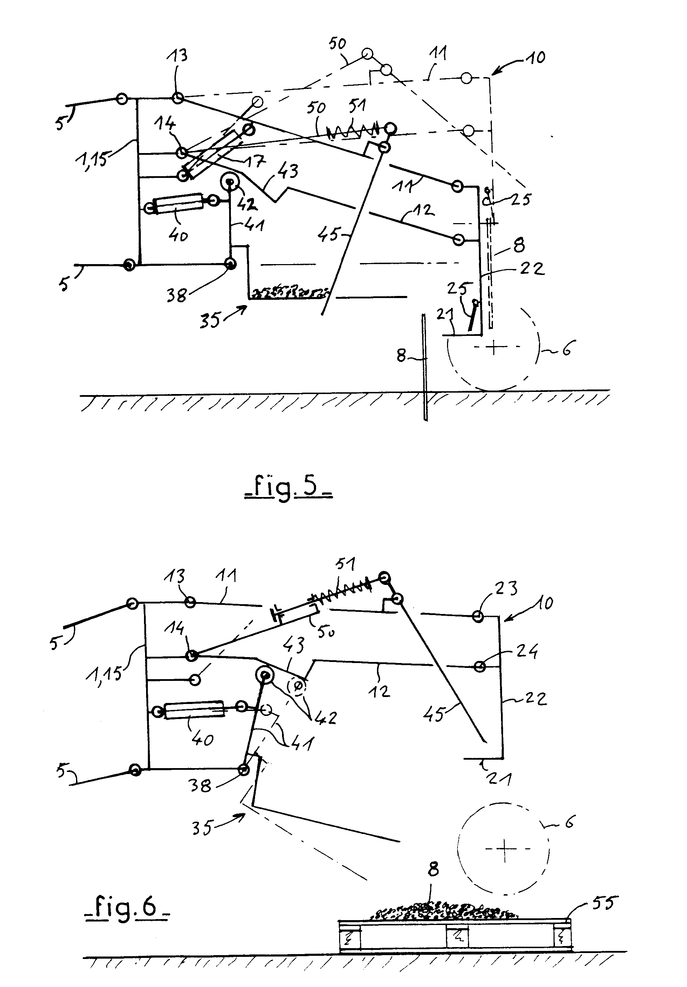

Ces caissons 36 sont solidaires d'un axe 38 disposé à l'avant, transversalement, soutenu par des pattes 39 fixées sur les bras latéraux 2 du châssis. Le pivotement du ratelier 35 grâce à cet axe 38, permet de déposer les arceaux arrachés 8, sur le sol ou sur une palette d'accueil comme montré plus loin figure 6.

La manoeuvre du ratelier 35 s'effectue au moyen d'un vérin 40 qui agit, sur les caissons 36, par l'intermédiaire d'une structure 41 solidaire de l'axe 38.

Le vérin 40 est disposé à l'avant de la machine, articulé dans une chape aménagée à l'avant de la chape 15.

On remarque, à la partie supérieure de la structure 41, une roulette 42 qui coopère avec une rampe 43 disposée sous l'un des bras 12. Cette rampe 43 permet, lors du mouvement de basculement du ratelier 35, de relever automatiquement la tête d'arrachage 10 ainsi que les bras rabatteurs 45 détaillés ci-après. Cette roulette 42 et la rampe 43 peuvent être assemblées, et être disposées sous chaque bras 12.

Pour maintenir les arceaux 8 dans le ratelier 35, un système de bras rabatteurs 45 est aménagé dans l'espace libre laissé entre les caissons 36. Ces bras rabatteurs 45 sont solidaires des extrémités d'un axe transversal 46 qui est monté pivotant dans des paliers 47 solidaires du bras supérieur 11 de manoeuvre de la tête d'arrachage 10. Ces bras rabatteurs 45 sont manoeuvrés au moyen d'une tige en deux parties, interposée entre l'axe 14 d'articulation des bras 12 et un axe 48 situé sur une bielle 49 solidaire de l'axe 46. La tige 50 qui commande les bras 45, comporte deux parties coulissantes l'une par rapport à l'autre et un ressort SI qui permet de maintenir élastiquement lesdits bras pour exercer une pression sur les arceaux 8 situés dans le ratelier 35. Cette tige 50 est représentée clairement, sur le schéma de la figure 6. Elle comprend deux parties qui coulissent l'une par rapport à l'autre et le ressort SI est interposé de façon à permettre un recul des bras 45 lorsque la quantité d'arceaux dans le ratelier 35 est importante. Ces arceaux sont alors maintenus dans le ratelier 35 par la pression exercée par les bras 45.

On remarque, disposés à la partie arrière de la machine de part et d'autre de la tête d'arrachage 10, des déflecteurs 53 en forme de tôles, inclinés de façon à faire progresser l'arceau arraché 8 en direction du ratelier 35. Ces déflecteurs 53 s'étendent entre un niveau qui correspond au niveau bas de la table 21 d'arrachage jusqu'à un niveau haut qui correspond sensiblement à la hauteur maximale atteinte par ladite table.

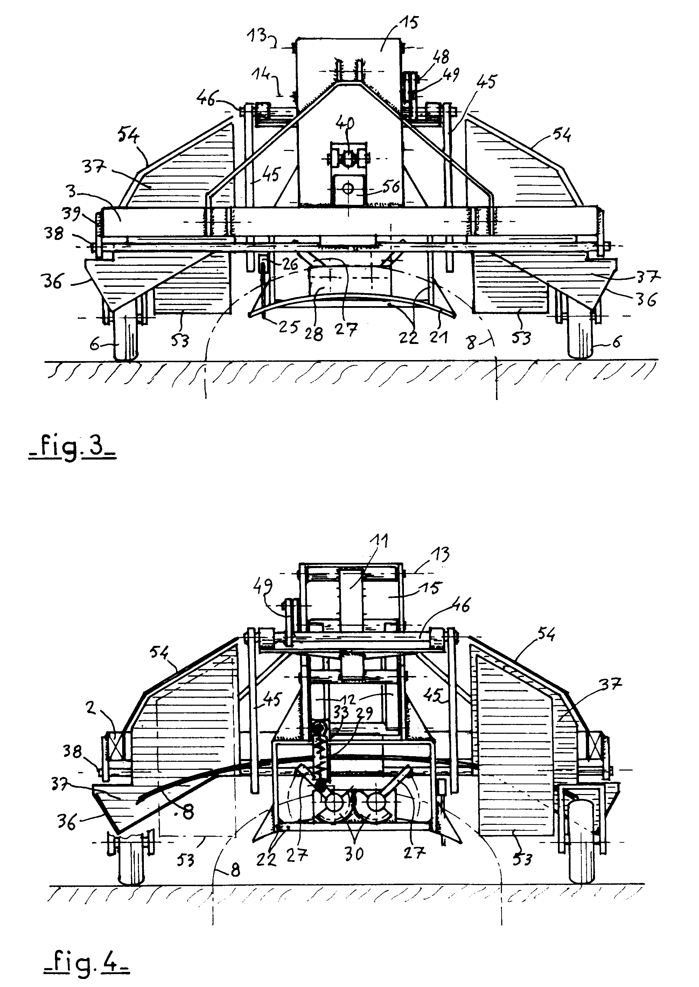

Ces déflecteurs 53 sont recouverts, à leur partie supérieure, par des écrans latéraux 54 qu! s'étendent longitudinalement de part et d'autre du plan médian de la machine, et des bras rabatteurs 45. Ces écrans 54 prolongent l'action des déflecteurs 53 pour guider les arceaux arrachés et les faire progresser vers le ratelier 35. Sur la figure 4, le déflecteur 53 de gauche est représenté en traits mixtes fins, montrant ainsi le caisson 36 et la présence d'arceaux arrachés 8. De la même façon, l'écran 54 disposé en bas de la figure 2, est représenté en traits mixtes fins, laissant apparaître clairement le caisson 36 et les arceaux arrachés 8.

On a représenté, figure 5, sous forme de schéma fonctionnel, le mouvement de la tête d'arrachage 10 ainsi que le mouvement des bras rabatteurs 45. En traits forts, on a représenté la machine dans sa position normale au repos ; on a représenté en traits mixtes fins le dispositif d'arrachage dans la position relevée. On remarque, dans cette position, que la tête d'arrachage 10 a atteint un niveau suffisant pour extraire totalement l'arceau hors de terre. En même temps que le relevage de la tête 10, on observe, sous l'effet de la tige 50, le basculement vers l'arrière des bras rabatteurs 45, de façon à les faire passer en arrière de l'arceau qui est arraché par la table 21 de la tête 10. Lorsque le dispositif d'arrachage redescend, les bras rabatteurs 45 basculent vers l'avant et ferment la partie arrière du ratelier 35 tout en poussant les arceaux arrachés 8 vers l'avant de ce ratelier 35.

Tout au long de cette opération d'arrachage, le ratelier 35 est maintenu dans sa position horizontale ou sensiblement horizontale au moyen du vérin 40.

On a représenté, figure 6, en traits forts et en traits mixtes fins, le ratelier 35 au cours de son basculement pour décharger les arceaux 8 arrachés. Cette opération de basculement du ratel ier 35 s'effectue au moyen du vérin 40. On remarque, sur cette figure, le mouvement du dispositif d'arrachage, simultanément au basculement du ratelier 35, par l'intermédiaire du galet 42 qui roule sur la rampe 43 et provoque le relevage du dispositif d'arrachage ainsi que l'escamotage des bras de rabattage 45.

On remarque, toujours figure 6, que la machine a également été soulevée du sol au moyen du système de relevage 5 du tracteur, pour faciliter la dépose des arceaux arrachés sur une palette 55 posée à même le sol.

Les figures 7 et 8 représentent, de façon schématique, l'ensemble des moyens de commande du dispositif d'arrachage. On remarque le vérin 17 chargé de lever et d'abaisser la tête d'arrachage 10 ainsi que le vérin 29 chargé de fermer les pinces qui maintiennent l'arceau arraché sur la table 21 de la tête. La tête d'arrachage 10 comporte, au niveau de sa table 21, le doigt 25 du contacteur 26 qui est mis en oeuvre automatiquement par un arceau 8 qui se présente devant ladite tête. Les vérins 17 et 29 sont alimentés au moyen d'une pompe 56 à travers un électrodistributeur 57. Cet électrodistributeur est schématisé sur le circuit hydraulique et il est repéré:
- N, dans sa position normale neutre c'est-à-dire dans une position où la pression dans le circuit hudraulique est nulle,
- M, lorsque le circuit hydraulique, et en particulier la pompe, alimente les vérins 17 et 29 pour les rendre actifs c'est-à-dire pour lever la tête d'arrachage et pour pincer l'arceau 8 qui se trouve en butée sur ladite tête d'arrachage,
- D, toujours en traits mixtes fins, pour l'alimentation croisée qui permet la descente des bras de commande de la tête et le relevage des pinces.

On a également fait figurer, en traits forts, au-dessus des bras de relevage, l'électrodistributeur 57, pour illustrer son alimentation électrique. Cet électrodistributeur 57 est soumis à plusieurs contacteurs:
-le contacteur 26 du type à deux contacts, qui initialise la séquence d'arrachage lorsqu'un arceau 8 vient en butée sur le doigt 25 du contacteur, - les contacteurs 60, 61, du type simples interrupteurs qui sont mis en oeuvre au fur et à mesure du mouvement du dispositif d'arrachage et en particulier des bras 11 et 12. Tel que représenté sur les figures, le contacteur 60, disposé en haut lorsque la tête d'arrachage 10 est en position basse, sert à couper l'alimentation de l'électrodistributeur 57 qui revient automatiquement en position neutre. Cette coupure s'effectue lorsque la tête d'arrachage arrive en position haute. Cette coupure a pour effet d'annuler la pression dans le circuit hydraulique et, de ce fait, de libérer automatiquement l'arceau arraché compte-tenu du fait que les pinces 27 relâchent leur pression sous l'effet du ressort de rappel 33. En redescendant, le contacteur bas 61, c'est-à-dire le contacteur situé du côté de la tête d'arrachage 10, positionne l'électrodistributeur 57 de façon à effectuer une alimentation inverse des vérins et à provoquer une descente des bras et un relevage complet des pinces 27.

On remarque que les vérins 17 et 29 fonctionnent avec des clapets et étrangleurs. Le vérin 17 comporte un clapet 63 du type à bille qui permet l'alimentation pour le levage des bras, sans restriction. Un dispositif étrangleur 64, branché en parallèle du clapet 63, freine la descente des bras du dispositif d'arrachage.

Le vérin 29 comporte un étrangleur 65 qui freine la fermerture des pinces de façon à provoquer un léger retard de cette fermeture par rapport au relevage de la tête 10. Un clapet 66, du type à bille, branché en parallèle de l'étrangleur 65, permet une vidange rapide du vérin 28 pour l'ouverture des pinces 27.

Les contacteurs 60 et 61 sont mis en oeuvre au moyen d'une came 62 montée sur l'un des bras 11 ou 12. Ces contacteurs 60 et61 sont guidés dans un support 67 qui est maintenu parallèle au bras 11 et qui est mobile par rapport à ce bras 11 au moyen d'une bielle 68 interposée entre le châssis 1, ou chape 15, et ledit support 67. Une telle disposition permet de régler facilement la course de levage de la tête 10.

La pompe 56 est disposée à l'avant de la machine, monté sur le bâti 1. Elle apparaît sur les figures 1 à 3. Un réservoir 69 est également intégré à la machine, positionné de préférence pour maintenir la pompe 56 en charge.

On a représenté, figure 8, le système de commande lorsque les bras de relevage arrivent en position haute alors que l'arceau 8 est encore maintenu en place par les pinces 27 sur la table 21.

On remarque que le contacteur 60 coupe l'alimentation de l'électrodistributeur 57. Cette coupure positionne l'électrovanne au neutre ce qui a pour effet de supprimer la pression dans le circuit hydraulique. Pendant ce court instant, le ressort de rappel 33 entre en action pour libérer l'arceau 8 en escamotant les pinces 27. Ceci a pour effet, dès que le contacteur 26 et en particulier son doigt 25 est libéré, de permettre la réalimentation de l'électrodistributeur 57 au moyen du contacteur 61 et de croiser l'alimentation des vérins 17,29, afin de faire descendre la tête d'arrachage et de relever complètement les pinces 27.

Les signes de référence insérés après les caractéristiques techniques contenues dans les revendications ont pour seul but de faciliter la compréhension de ces dernières et n'en limitent aucunement la portée.

## Revendications

1.- Machine pour l'arrachage d'arceaux ayant servi à la formation de tunnels de culture, comportant, rassemblés sur un même châssis (1) qui est porté au-dessus desdits arceaux, un dispositif d'arrachage (9) et un ratelier (35) servant au stockage desdits arceaux arrachés, caractérisée en ce que le dispositif d'arrachage (9) est constitué - d'une tête d'arrachage (10) munie d'une table (21) dont la forme s'apparente à une voûte adaptée au gabarit de l'arceau à déterrer, et - de moyens de déplacement de ladite tête de bas en haut et de haut en bas pour agripper chaque arceau (8) et le libérer au-dessus dudit ratelier, lesquels moyens sont mis en oeuvre automatiquement par un système de commande qui comprend au moins un organe de détection de la présence d'un arceau (8) au niveau de ladite tête (10).

2.- Machine pour l'arrachage d'arceaux selon la revendication 1, caractérisée en ce que les moyens de déplacement de la tête d'arrachage (10) sont constitués de bras (11, 12) formant deux côtés d'un parallélogramme qui est déformable sous l'effet d'un organe de commande du type vérin (17), lesquels bras (11, 12) d'une part, sont articulés à l'avant du châssis (1), autour d'axes (13,14) superposés, disposés transversalement par rapport au sens d'avancement (16), et d'autre part, en position basse, se situent en-dessous du niveau de leurs axes d'articulation (13, 14) pour permettre, lors de l'arrachage, d'annuler la vitesse relative de la tête d'arrachage (10) par rapport au sol et effectuer ainsi un arrachage de l'arceau (8) dans un plan sensiblement vertical.

3.- Machine pour l'arrachage d'arceaux selon la revendication 2, caractérisée en ce qu'elle comporte des bras rabatteurs (45) dont le mouvement est conjugué à celui des bras (11, 12)d'actionnementdeiatête d'arrachage (10), lesquels bras rabatteurs (45) accompagnent et/ou propulsent les arceaux (8) arrachés, vers le ratelier (35) et les maintiennent élastiquement dans ledit ratelier.

4.- Machine pour l'arrachage d'arceaux selon la revendication 3, caractérisée en ce qu'elle comporte un ratelier (35) situé à l'avant du châssis (1), sous les bras de manoeuvre, devant la tête d'arrachage (10), lequel ratelier comprend deux caissons (36) disposés de part et d'autre du plan médian de la machine, lesquels caissons sont solidaires d'un axe transversal (38) qui permet le basculement dudit ratelier de façon à déposer au sol les arceaux (8) arrachés et, simultanément à ce basculement, à effectuer un relevage des bras (11, 12) de la tête d'arrachage (10) et l'escamotage des bras rabatteurs (45).

5.- Machine pour l'arrachage d'arceaux selon la revendication 4, caractérisée en ce qu'elle comporte des déflecteurs (55) disposés à l'arrière de part et d'autre de la tête, inclinés de façon à faire progresser chaque arceau arraché vers le ratelier (35), ces déflecteurs (53) étant suivis d'écrans latéraux (54), situés au-dessus dudit ratelier (35) afin de canaliser lesdits arceaux.

6.- Machine pour l'arrachage d'arceaux selon l'une quelconque des revendications 1 à 5, caractérisée en ce que la tête d'arrachage (10) comporte un doigt (25) servant à déclencher la séquence d'arrachage, lequel doigt est articulé pour basculer vers l'arrière, poussé par l'arceau (8) au fur et à mesure de l'avancement de la machine, le basculement du doigt (25) déclenchant, par l'intermédiaire d'un contacteur (26), la séquence d'arrachage.

7.- Machine pour l'arrachage d'arceaux selon la revendication 6, caractérisée en ce qu'elle comporte, sur la tête d'arrachage (10), des moyens de blocage de l'arceau (8), en forme de pinces (27) disposées latéralement de chaque côté du plan longitudinal médian (7), lesquelles pinces sont actionnées automatiquement, au début de la séquence d'arrachage, au moyen d'un vérin (29).

8.- Machine pour l'arrachage d'arceaux selon la revendication 7, caractérisée en ce qu'elle comporte en plus du contacteur (26) situé sur la tête d'arrachage, des contacteurs (60, 61) actionnés au moyen d'une rampe (62) fixée sur l'un des bras (11, 12), le mouvement desdits contacteurs (60, 61) est conjugué à celui desdits bras de manoeuvre (11, 12) de la tête d'arrachage, l'un des contacteurs servant à couper l'alimentation des vérins de manoeuvre (17, 29), l'autre contacteur servant à inverser l'alimentation desdits vérins de manoeuvre.

9.- Machine pour l'arrachage d'arceaux selon la revendication 8, caractérisée en ce que le circuit hydraulique de commande comprend : - un électrodistributeur (57) manoeuvré par les contacteurs (26, 60, 61), des clapets (63, 66) et étrangleurs (64, 65), sur les vérins (17 et 29) respectivement, disposés de façon à retarder la fermeture des pinces (27) par rapport à la levée de la tête d'arrachage (10) et retarder la descente de ladite tête par rapport à l'ouverture desdites pinces, laquelle ouverture des pinces (27) est initialisée au moyen d'un ressort de rappel (33).
